# EUROPÄISCHE PATENTSCHRIFT

(11) **EP 0 905 503 B1**
(45) Veröffentlichungstag und Bekanntmachung des Hinweises auf die Patenterteilung: **09.10.2002**
(21) Anmeldenummer: 98113878.7
(22) Anmeldetag: 24.07.1998
(51) Int. Cl.: G01N 3/00, G01N 33/46

(54) **Verfahren zur zerstörungsfreien Überprüfung der Standsicherheit eingebauter Leitungsmasten aus Holz, insbesondere zur Festsellung von Fäulnis durch Pilz- oder Insektenbefall**
Procedure for the nondestructive examination of the stability of embedded wooden poles, especially for the determination of rottenness caused by fungal or insect attack
Procédé pour la inspection nondestructif de la stabilité des poteaux de support en bois, en particulier pour la détermination de poursiture par attaque par champignons ou infestation par vermines

(30) Priorität: 30.09.1997 DE 19743119
(43) Veröffentlichungstag der Anmeldung: 31.03.1999
(73) Patentinhaber: Deutsche Telekom AG, 53113 Bonn (DE)
(72) Erfinder: Schatz, Reinhard, Dipl.-Ing., 70499 Suttgart (DE)

(56) Entgegenhaltungen:
- AT-B- 392 159
- GB-A- 2 297 381
- GB-A- 2 301 191
- US-A- 3 877 294
- US-A- 4 059 988
- US-A- 4 249 414
- US-A- 4 343 179
- US-A- 4 350 044
- US-A- 4 926 691
- US-A- 5 567 871

## Beschreibung

Die Erfindung betrifft ein Verfahren zur zerstörungsfreien Überprüfung der Standsicherheit eingebauter Leitungsmasten aus Holz, insbesondere zur Feststellung von Fäulnis durch Pilz- oder Insektenbefall.

Als Stützpunkte oberirdischer Linien, insbesondere im Rahmen eines Telefonnetzes, werden häufig Leitungsmasten aus Holz verwendet. Holz ist anfällig gegen Festigkeitsverlust durch Pilz- oder Insektenbefall. Daher ist es aus Gründen der Arbeitssicherheit vorgeschrieben, jeden Masten vor dem Besteigen auf seine Standfestigkeit zu prüfen. Darüber hinaus sind alle Masten unabhängig vom Besteigen im Rahmen der Verkehrssicherungspflicht regelmäßig auf Standsicherheit zu prüfen.

Die Standsicherheitsprüfung erfolgt gegenwärtig durch Klopfen mit einem Hammer, wobei die Beurteilung der Ergebnisse sehr große Erfahrung der Prüfkräfte voraussetzt. Das akustische Ergebnis, d.h. das beim Klopfen an den Mast entstehende Geräusch, wird subjektiv durch den Prüfenden bewertet.

Alternativ wird die Standsicherheit überprüft, indem im Bereich der Erdgleiche, d.h. im Bereich des Austritts des Mastens aus der Erde, ein Bohrkern bezogen wird. Die Erdgleiche ist wegen des Kontakts des Holzes zu Luft und Erde der am meisten gefährdete Bereich des Mastens. Die Festigkeit des dort gezogenen Bohrkerns soll Auskunft über die Festigkeit des Mastens insgesamt geben. Die Anfertigung und Beurteilung von solchen Bohrkernen ist jedoch eine Tätigkeit, die wiederum viel Erfahrung und Übung voraussetzt. Da beides in der Praxis kaum vorhanden ist und das Freilegen der Erdgleiche zudem einen großen Arbeitsaufwand darstellt, wird von den Arbeitskräften meist auf eine Standssicherheitsprüfung vor dem Besteigen des Mastens verzichtet. Ein weiterer Nachteil des Anbohrens des Mastens besteht darin, daß es sich beim Anbohren um ein teilzerstörendes Verfahren handelt. Durch mehrmalige Standsicherheitsprüfungen wird der Mast im Bereich der Erdgleiche perforiert, wodurch letztendlich seine Gebrauchsdauer verringert wird.

Bei den bekannten Verfahren zur Überprüfung des Zustands, insbesondere der Standsicherheit, von Leitungsmasten handelt es sich daher um lediglich qualitative Verfahren, welche einen großen Erfahrungsschatz seitens des Prüfenden voraussetzen, um zu einem Prüfergebnis zu gelangen. Ein quantitativer Vergleich der Zustände mehrere Leitungsmasten, insbesondere auch ganzer Linien, ist gegenwärtig nicht möglich.

Die US-A-3 877 294 offenbart ein Verfahren zur Überprüfung der Standfestigkeit von Leitungsmasten aus Holz. Der Verfall des Holzmasten wird dadurch bestimmt, daß der Leitungsmast durch eine definierte mechanische Kraft mit Hilfe eines elektromagnetischen Vibrators oder Hammers, zum Schwingen in der Eigenresonanzfrequenz gebracht wird und die R.M.S. Geschwindigkeit, beziehungsweise die Beschleunigung der Schwingung im Masten, die dem Elastizitätsmodul proportional ist, an mehreren Punkten des Mastes mit einem piezoelektrischen Messfühler gemessen wird. Die Schwingungsanregung erfolgt etwa 1 m über der Ergleiche, die Messungen werden in definierten Abständen bis zu einem Niveau von 15 cm unter der Erdgleiche durchgeführt.

Der Erfindung liegt daher die Aufgabe zugrunde, ein Verfahren zur Überprüfung der Standsicherheit eingebauter Leitungsmasten aus Holz anzugeben, welches zerstörungsfrei ist und leicht die Beruteilung der Standsicherheit ermöglicht, ohne einen großen Erfahrungsschatz seitens des Prüfenden vorauszusetzen.

Die Lösung der Aufgabe besteht erfindungsgemäß bei einem Verfahren zur zerstörungsfreien Überprüfung der Standsicherheit eingebauter Leitungsmasten aus Holz, insbesondere zur Feststellung von Fäulnis durch Pilz- oder Insektenbefall, wobei eine zum Elastizitätsmodul E des Leitungsmasts proportionale Größe E' in wenigstens zwei verschiedenen Höhen h, die um wenigstens einen Meter beabstandet sind, über der Erdgleiche gemessen wird, indem ein Bolzen mit definierter Energie auf den Leitungsmast geschossen und die Auslenkung des Bolzens beim Zurückfedern gemessen wird, wobei die Standsicherheit gegeben ist, wenn die in verschiedenen Höhen gemessenen Größen E um weniger als 30% voneinander abweichen.

Damit läßt sich der Zustand eines Leitungsmasten leicht quantitativ und objektiv anhand eines Zahlenwerts bzw. aufgrund des prozentualen Unterschieds zweier Werte bestimmen.

Vorzugsweise wird die Meßgröße E im Bereich der Erdgleiche, d.h. im Austrittsbereich aus dem Boden, sowie in einer Höhe von ein bis zwei Metern gemessen. Da die Erdgleiche der am meisten gefährdete Bereich eines Leitungsmasten aus Holz ist, gibt der mit diesen beiden Höhen durchgeführte Vergleich guten Aufschluß über die derzeit gegebene Standfestigkeit. Das Elastizitätsmodul aus dem gefährdeten Bereich wird mit dem Elastizitätsmodul aus dem intakten Mastbereich verglichen.

Das Elastizitätsmodul E bzw. eine dazu proportionale Größe E' wird schnell, sicher und zerstörungsfrei mit Hilfe eines Holzprellhammers ermittelt.

Prellhämmer arbeiten nach dem Prinzip eines Bolzenschutzapparates: Im Inneren wird eine Feder gespannt, welche einen Schlagbolzen mit definierter Energie auf das zu prüfende Material aufschlagen läßt. Je härter dieses Material ist, desto stärker wird der Bolzen zurückgefedert, wobei die Auslenkung des Bolzens beim Zurückfedern ein Maß für das Elastizitätsmodul und damit die Festigkeit des Mastens ist.

Das Prüfverfahren gibt allerdings nur Auskunft über die Festigkeit des von außen zugänglichen Teils des Mastens, des sogenannten Splintbereichs. Der Zustand des Mastenkerns kann damit nicht überprüft werden. Diese Einschränkung ist jedoch für die Anwendbarkeit des Verfahrens unerheblich, denn aus der Mechanik ist bekannt, daß bei zylinderförmigen Körpern, die auf Biegung beansprucht werden, der größte Lastanteil auf dem äußeren Kreisring abgefangen wird. Der Kernbereich innerhalb dieses äußeren Kreisringes nimmt im Wesentlichen nur Druckkräfte auf. Pilzbefall bzw. der Abbau von Holzsubstanz durch Pilzbefall findet jedoch in der Regel von außen nach innen, d.h. vom Splint zum Kern hin, statt. Es ist somit zulässig, über die Beurteilung einer äußeren Holzschicht (des gesamten Splintbereichs) auf die Biegefestigkeit und damit die Standsicherheit des Mastens zu schließen.

Durch das erfindungsgemäße Meßverfahren wird es möglich, den Zustand von Leitungsmasten aus Holz auch quantitativ zu charakterisieren und zu dokumentieren. Beispielsweise wird volle, mittlere und reduzierte Festigkeit diagnostiziert bei 0 bis 10, 10 bis 20 bzw. 20 bis 30% Unterschied in den beiden Meßwerten, und totaler Pilzbefall bei mehr als 30% Unterschied.

## Patentansprüche

1. Verfahren zur zerstörungsfreien Überprüfung der Standsicherheit eingebauter Leitungsmasten aus Holz, insbesondere zur Feststellung von Fäulnis durch Pilz- oder Insektenbefall, wobei eine zum Elastizitätsmodul E des Leitungsmasts proportionale Größe E' in wenigstens zwei verschiedenen Höhen h, die um wenigstens einen Meter beabstandet sind, über der Erdgleiche gemessen wird, indem ein Bolzen mit definierter Energie auf den Leitungsmast geschossen und die Auslenkung E' des Bolzens beim Zurückfedern gemessen wird, wobei die Standsicherheit gegeben ist, wenn die in verschiedenen Höhen gemessenen Größen E' um weniger als 30% voneinander abweichen.

2. Verfahren nach Anspruch 1, **dadurch gekennzeichnet,**
**daß** zur Bestimmung der Meßgrößen E' ein Holzprellhammer verwendet wird.

3. Verfahren nach Anspruch 1 oder 2, **dadurch gekennzeichnet,**
**daß** die Meßgröße E' im Bereich der Erdgleiche, d.h. im Austrittsbereich aus dem Boden, sowie in einer Höhe von 1-2 Metern gemessen wird.

## Claims

1. Method for the nondestructive examination of the stability of erected wooden line poles, particularly in order to detect rotting as a result of attack by fungus or insects, wherein a quantity λ^{E'}, proportional to the modulus of elasticity E of the line pole, is measured at at least two different heights h, at least one metre apart, above ground level in that a bolt of defined energy is shot onto the line pole and the deflection E' of the bolt as it springs back is measured, the line pole being stable if the quantities E' measured at different heights differ from each other by less than 30%.

2. Method according to claim 1, **characterized in that**
a wooden rebound hammer is used for determining the quantities E'.

3. Method according to claim I or 2, **characterized in that**
the quantity E' is measured in the region of ground level, i.e. in the region of exit from the ground, as well as at a height of 1-2 metres.

## Revendications

1. Procédé permettant de vérifier sans destruction la stabilité statique de poteaux de lignes en bois et déterminer en particulier la pourriture due aux champignons ou aux insectes, au cours duquel une grandeur E' proportionnelle au module d'élasticité E du poteau est mesurée à au moins deux hauteurs h différentes au-dessus du niveau du sol espacées l'une de l'autre d'au moins un mètre, un projectile étant projeté avec une énergie définie sur le poteau et l'excursion λ^{E'} du projectile lors du rebondissement étant mesurée, la stabilité statique étant considérée comme assurée si les grandeurs E' mesurées aux différentes hauteurs divergent de moins de 30% entre elles.

2. Procédé selon la revendication 1, **caractérisé en ce que**
un marteau à bois est utilisé pour définir les grandeurs de mesure E'.

3. Procédé selon les revendications 1 ou 2, **caractérisé en ce que**
la grandeur de mesure E' est mesurée dans la zone du niveau du sol, c'est-à-dire dans la zone où le poteau sort du sol, ainsi qu'à une hauteur de 1 à 2 mètres.
